# EUROPÄISCHE PATENTSCHRIFT

(11) **EP 2 032 481 B1**
(45) Veröffentlichungstag und Bekanntmachung des Hinweises auf die Patenterteilung: **30.11.2011**
(21) Anmeldenummer: 07725098.3
(22) Anmeldetag: 11.05.2007
(51) Int. Cl.: B65G 47/48, B65G 47/84

(54) **TRANSPORTEUR**
CONVEYOR
TRANSPORTEUR

(30) Priorität: 13.05.2006 DE 102006022465
(43) Veröffentlichungstag der Anmeldung: 11.03.2009
(73) Patentinhaber: KHS GmbH, 44143 Dortmund (DE)
(72) Erfinder: MENKE, Herbert, 56659 Burgbrohl (DE); WEISGERBER, Martin, 52222 Stolberg (DE); POHL, Ralph, 56598 Rheinbrohl (DE)
(86) Internationale Anmeldenummer: PCT/EP2007/004178
(87) Internationale Veröffentlichungsnummer: WO 2007/131713

(56) Entgegenhaltungen:
- EP-A1- 0 573 352
- EP-A1- 0 875 459
- DE-A1- 4 128 733
- DE-C- 184 304
- US-A- 3 367 472
- US-B2- 6 905 012

## Beschreibung

Die Erfindung bezieht sich auf einen Transporteur für Flaschen oder dergleichen Behälter gemäß Oberbegriff Patentanspruch 1.

Ein Transporteur der gattungsbildenden Art ist bekannt (DE 184 304 C; EP 0 875 459 A1, US-A- 3 367 472), wobei in einem Fall der Transporteur Bestandteil eines Transportsystems einer Flaschenreinigungsmaschine ist (DE 184 304 C), und zwar mit einem Transportelement in Form einer eine geschlossene Schlaufe bildenden Transportkette, an der um Achsen senkrecht zur Transportrichtung des Transportelementes kastenartige Aufnahmen für die zu reinigenden Flaschen vorgesehen sind, und in einem anderen Fall der Transporteur Bestandteil einer Maschine zum Füllen von Tuben (EP 0 875 459 A1) oder zum Bedrucken von Tuben (US-A- 3 367 472) ist, und zwar jeweils mit einer Vielzahl von Aufnahmen oder Tubenhalter für die Tuben an einem endlos umlaufend antreibbaren Transportband. Die Aufnahmen oder Tubenhalter sind jeweils gesteuert um in Transportrichtung des Transportbandes orientierten Achsen schwenkbar.

Bekannt ist weiterhin (US 6,905,012 B2), bei Maschinen zum Behandeln von Flaschen, insbesondere zum Reinigen und/oder Desinfizieren von Flaschen die Behälteraufnahmen, die für eine hängende Halterung der Flaschen an einem um eine vertikale Maschinenachse umlaufend antreibbaren Rotor vorgesehen sind, gesteuert um Achsen tangential zur Drehrichtung des Rotors zu schwenken, um zwar in der Form, dass die bei der Übergabe und Abnahme an bzw. von den Behälterträgern an diesen in Normallage, d.h. mit dem Flaschenboden unten liegend orientierten Flaschen für die Behandlung Überkopf geschwenkt, d.h. mit ihren Flaschenboden oben liegend angeordnet sind.

Bekannt ist weiterhin ein Transporteur (DE 41 28 733 A1), dessen Transportelement ein um eine vertikale Maschinenachse umlaufend antreibbarer Rotor mit mehreren Behälteraufnahmen am Umfang des Rotors für jeweils eine Flasche ist. Jede Behälteraufnahme besteht aus einem Drehteller, auf den die jeweilige Flasche mit ihrem Boden aufsteht und der bei umlaufendem Rotor um eine mit der Flaschenachse achsgleiche Drehtellerachse drehbar angetrieben ist, sowie aus einer mit der Flaschenmündung und einem Mündungsflansch zusammenwirkenden Halte- und Einspanneinrichtung. Bei umlaufenden Motor wird die jeweilige Flasche um ihre Flaschenachse mit dem Drehteller gedreht.

Aufgabe der Erfindung ist es, einen Transporteur aufzuzeigen, mit dem nicht nur ein Transport der Behälter möglich ist, sondern auch eine vorzugsweise gesteuerte Bewegung und/oder Positionierung der Behälter und Behälteraufnahmen während des Transportes bzw. auf der von dem Transporteur gebildeten Transportstrecke.

Zur Lösung dieser Aufgabe ist ein Transporteur entsprechend dem Patentanspruch 1 ausgebildet.

Der erfindungsgemäße Transporteur ist für leere, aber auch für gefüllte Behälter geeignet. Behälter im Sinne der Erfindung sind u.a. Flaschen oder flaschenartige Behälter, aber auch andere Behälter oder Verpackungen aus Metall und/oder Kunststoff und/oder Karton, insbesondere auch für Dosen, Gläser, Tuben usw.

Weiterbildungen der Erfindung sind Gegenstand der Unteransprüche. Die Erfindung wird im Folgenden anhand der Figuren an einem Ausführungsbeispiel näher erläutert. Es zeigen:

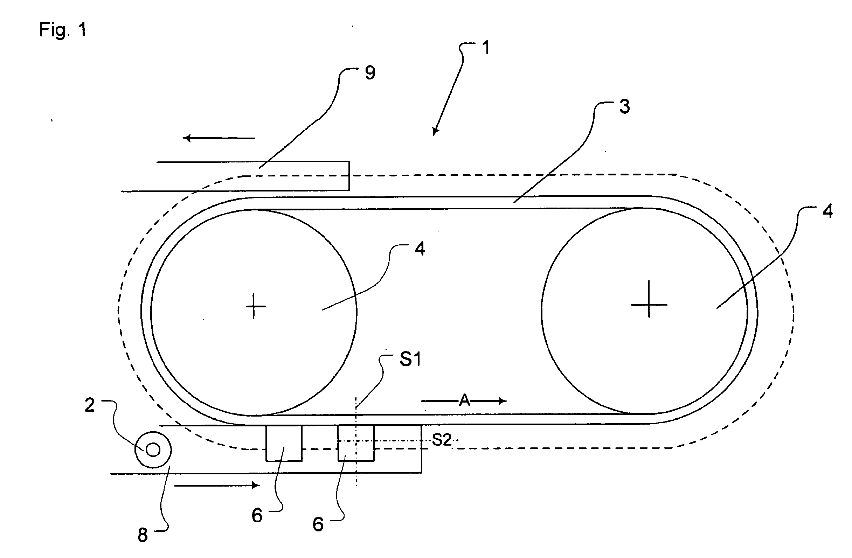

- Fig. 1: in sehr schematischer Darstellung und in Draufsicht einen Transporteur zum Transportieren von Behältern in Form von Flaschen;
- Fig. 2: in vereinfachter Darstellung eine der Behälteraufnahmen des Transporteurs der Figur 1;
- Fig. 3 u. 4: in schematischer Darstellung ein bandförmiges Transportelement des Transporteurs zusammen mit Flaschen in unterschiedlichen Positionen relativ zu dem Transportelement.

In den Figuren ist 1 ein Transporteur zum Transportieren von Flaschen 2 sowie auch zur gesteuerten Positionierung und/oder Bewegung der Flaschen 2 am Transporteur 1 während des Transportes und/oder auf der von dem Transporteur 1 gebildeten Transportstrecke.

Der Transporteur 1 besteht bei der dargestellten Ausführungsform aus einem eine geschlossene Schlaufe bildenden Transportelement 3, welches beispielsweise von wenigstens einem flexiblen Gurt und/oder Band und/oder von wenigstens einer Kette gebildet ist und welches bei der dargestellten Ausführungsform über zwei jeweils um eine vertikale Achse drehbar gelagerte Umlenkrollen oder Räder 4 geführt ist, sodass das Transportelement 3 bei der dargestellten Ausführungsform eine in einer horizontalen oder annähernd horizontalen Ebene angeordnete ovale Schlaufe bildet. Selbstverständlich kann die von dem Transportelement 3 gebildete Schlaufe bei entsprechender Anzahl und/oder Anordnung der Umlenkräder 4 auch eine andere Formgebung aufweisen.

Zumindest eines der Umlenkräder 4 ist antriebsmäßig mit einem nicht dargestellten Antrieb verbunden, sodass bei eingeschaltetem Transporteur 1 das Transportelement 3 in einer Transport- oder Förderrichtung A umläuft. Um einen sicheren und vorzugsweise auch zumindest einigermaßen positionsgenauen Antrieb für das Transportelement 3 zu erreichen, sind an dem angetriebenen Umlenkrad 4 und am Transportelement 3 Mittel vorgesehen, die einen möglichst schlupffreien Antrieb des Transportelementes 3 durch das angetriebene Umlenkrad 4 sicherstellen. Im einfachsten Fall können diese Mittel durch eine Reibungskopplung zwischen dem angetriebenen Umlenkrad 4 und dem Transportelement 3 gebildet sein. Weiterhin besteht die Möglichkeit, am Transportelement 3 Eingriffsmittel für Mitnehmerelemente an dem angetriebenen Umlenkrad 4 vorzusehen, beispielsweise in der Form, dass das Transportelement 3 an der Innenseite der von diesem Element gebildeten Schlaufe zahnriemenartig ausgebildet bzw. mit einer Verzahnung 5 versehen ist, die dann mit einer entsprechenden Verzahnung am angetriebenen Umlenkrad 4 zusammenwirkt.

In Transportrichtung A gegeneinander versetzt sind am Transportelement 3 Behälteraufnahmen 6 vorgesehen, und zwar an der die Außenseite der Schlaufe bildenden Seite des Transportelementes 3. Jede Behälteraufnahme 6 ist mit einem Halter 7 am Transportelement 3 befestigt, und zwar vorzugsweise leicht austauschbar. Weiterhin sind die Behälteraufnahmen 6 z.B. greiferkopfartig ausgebildet, sodass die jeweilige Flasche 2 an ihrer Flaschenmündung 2.1 hängend an der betreffenden Behälteraufnahme 6 gehalten ist.

Die Flaschen 2 werden aufrecht stehend über ein eine Behälteraufgabe bildendes Transportband 8 zugeführt, an der Behälteraufgabe jeweils nacheinander von jeweils einer Behälteraufnahme 6 erfasst und mit dieser in Transportrichtung A an ein eine Behälterabgabe bildendes Transportband 10 bewegt.

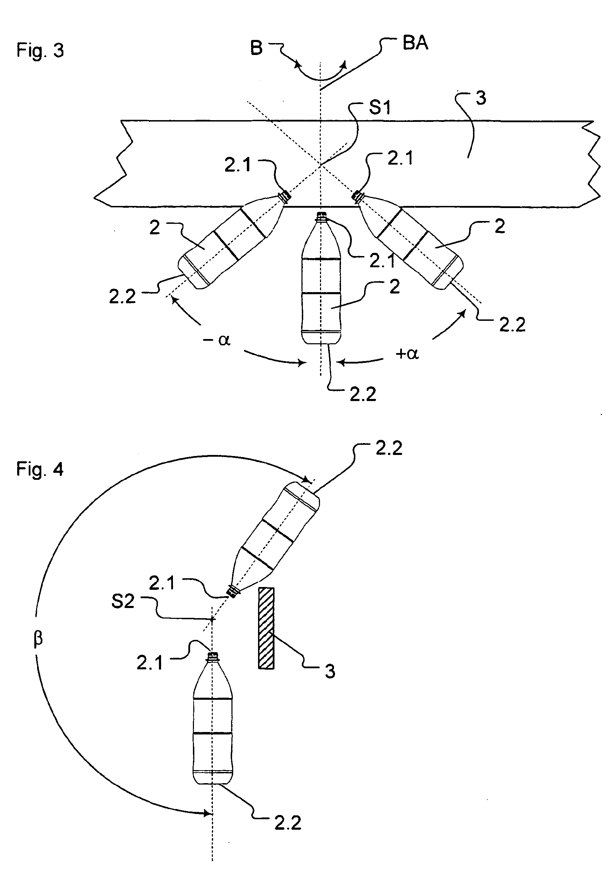

Jede Behälteraufnahmen 6 ist an dem zugehörigen Halter 7 für Bewegungen um mehrere Achsen und in mehreren Achsen vorgesehen, und zwar u.a. entsprechend den Figuren 3 und 4 für gesteuerte Schwenkbewegungen um zwei vorzugsweise senkrecht zueinander orientierte horizontale Schwenkachsen S1 und S2. Entsprechend der Figur 3 ist in diesem Sinne jede Behälteraufnahmen 6 um eine horizontale Achse S1 senkrecht zur Transportrichtung A schwenkbar, und zwar aus einer Ausgangslage, in der die Achse der Behälteraufnahme 6 bzw. die mit dieser achsgleich angeordnete Flaschen- oder Behälterachse BA in vertikaler Richtung orientiert sind, gesteuert um einen Winkel +α in der Weise, dass die geschwenkte Flasche 2 mit ihrem Flaschenboden 2.2 in Transportrichtung A vorauseilt, sowie um einen Winkel -α in einer Weise, dass die geschwenkte Flasche 2 mit ihrem Flaschenboden 2.2 in Transportrichtung A nacheilt. Diese Schwenkwinkel können 90° oder mehr betragen.

Weiterhin ist entsprechend der Figur 4 jede Behälteraufnahmen 6 auch um eine Schwenkachse S2 parallel zur Transportrichtung A schwenkbar, und zwar beispielsweise aus der vertikalen Ausgangslage gesteuert um einen Winkel β, der maximal größer als 180° sein kann.

Jede Behälteraufnahme 6 ist ferner, wie mit dem Pfeil B angedeutet, um ihre Achse bzw. die Behälterachse BA drehbar, und zwar u.a. derart, dass jede Behälteraufnahme 6 beispielsweise aus einer Ausgangsstellung oder -position gesteuert um vorgegebene Winkelbeträge in jede Richtung um die Achse BA gedreht werden kann. Weiterhin ist jede Behälteraufnahme 6 auch um die Achse BA rotierend antreibbar, wobei diese Drehbewegungen dann auch bei geschwenkter Behälteraufnahme 6 möglich sind. Vorzugsweise kann die Rotationsgeschwindigkeit um die Achse BA durch die Verwendung (elektro)motorischer Antriebsmittel für diese Rotationsbewegung frei gewählt werden.

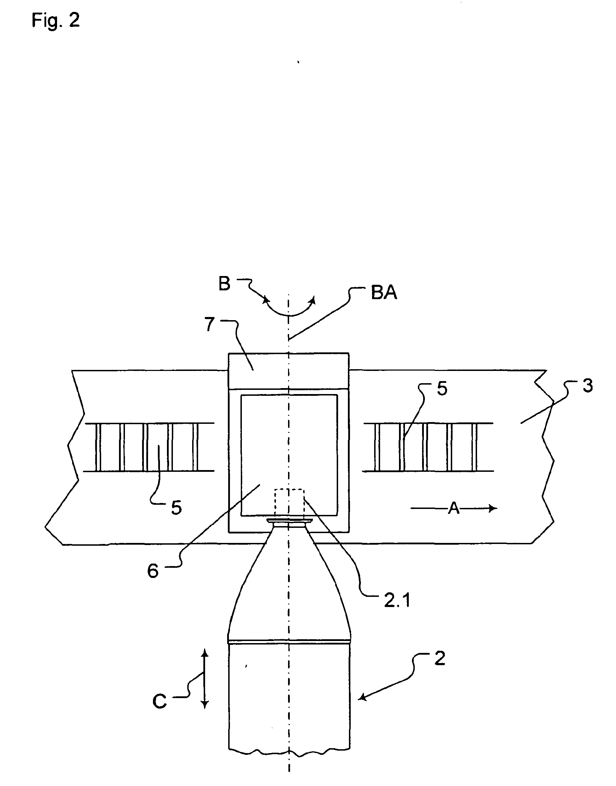

Weiterhin ist jede Behälteraufnahme 6 bevorzugt auch zumindest in einer der Achsen, beispielsweise in der Achse BA um einen vorgegebenen Hub bewegbar, und zwar beispielsweise zum Aufnehmen und Absetzen der Flaschen 2 von dem Transportband 8 bzw. auf das Transportband 9, wie dies in der Figur 2 mit dem Doppelpfeil C angedeutet ist.

Für die verschiedenen Bewegungen, insbesondere auch für die gesteuerten Schwenk-, Dreh- und Hubbewegungen der Behälteraufnahmen 6 sind verschiedene Antriebskonzepte möglich, beispielsweise motorische Antriebe und/oder Stellglieder an den einzelnen Behälteraufnahmen 6 und/oder mit dem Transportelement 3 sich nicht mitbewegende Antriebs- und Steuerelemente, die an der Bewegungsbahn der Behälteraufnahmen 6 vorgesehen sind und mit Steuer- und/oder Antriebselementen oder-getrieben an den Behälteraufnahmen 6 zusammenwirken.

Die Behälteraufnahmen 6 können in unterschiedlichster Form ausgebildet werden, beispielsweise greiferkopfartig, wie bereits vorstehend beschrieben, oder aber auch als Vakuumhalter oder Aufnahmen usw.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird. So ist es beispielsweise möglich, das Transportelement 3 so auszuführen, dass es aus wenigstens zwei oder mehr als zwei, jeweils eine Schlaufe bildenden parallelen Einzelelementen, beispielsweise Ketten, Bändern, Gurten usw. besteht, wobei dann der einzelnen Behälteraufnahmen 6 z.B. jeweils zwischen diesen Einzelelementen gehalten sind.

Die Erfindung wurde vorstehend an einem Transporteur 1 für Flaschen 2 beschrieben. Selbstverständlich ist der Transporteur 1 - gegebenenfalls unter entsprechender Anpassung der Behälteraufnahmen 6 - auch für andere Behälter oder Verpackungen aus Metall und/oder Kunststoff und/oder Karton geeignet, insbesondere auch für Dosen, Gläser, Tuben usw..

Weiterhin ist es nicht zwingend notwendig, dass die Ebene der Schlaufe des endlos umlaufend angetriebenen Transportelementes 3 eine horizontale Ebene ist, vielmehr kann diese Ebene gegenüber der Horizontalen geneigt und/oder bei entsprechender Ausbildung des Transportelementes auch einfach oder mehrfach gekrümmt sein, und/oder die von dem Transportelement gebildete Schlaufe kann abschnittsweise in unterschiedlichen, gegeneinander geneigten Ebenen verlaufen.

### Bezugszeichenliste

- 1: Transporteur
- 2: Flasche
- 2.1: Flaschenmündung
- 2.2: Flaschenboden
- 3: Transportelement
- 4: Umlenkrad
- 5: Verzahnung
- 6: Behälteraufnahme
- 7: Halter oder Lager
- 8,9: Transportband
- A: Transportrichtung
- B: Drehbewegung
- C: Hubbewegung
- BA: Behälterachse
- S1, S2: Schwenkachse

- α, β: Schwenkwinkel

## Patentansprüche

1. Transporteur für Flaschen oder dergleichen Behälter (2), mit wenigstens einem eine geschlossene Schlaufe bildenden, umlaufend antreibbaren Transportelement (3) und mit wenigstens einer am Transportelement (3) beweglich vorgesehenen Behälteraufnahme (6) für wenigstens einen Behälter (2), **dadurch gekennzeichnet, dass** die wenigstens eine Behälteraufnahme (6) in wenigstens zwei senkrecht zu einander verlaufenden Achsen (BA, S1, S2) relativ zum Transportelement (3) bewegbar ist.

2. Transporteur nach Anspruch 1, **dadurch gekennzeichnet, dass** die wenigstens eine Behälteraufnahme (6) für eine hängende Halterung wenigstens eines Behälters (2) ausgebildet ist.

3. Transporteur nach Anspruch 1 oder 2, **dadurch gekennzeichnet, dass** wenigstens eine Achse eine Schwenkachse (S1, S2) ist, um die die Behälteraufnahme (6) schwenkbar, vorzugsweise gesteuert schwenkbar an dem Transportelement (3) vorgesehen ist.

4. Transporteur nach Anspruch 3, **dadurch gekennzeichnet, dass** die wenigstens eine Schwenkachse (S1, S2) in einer Transportrichtung (A) des Transportelementes (3) oder senkrecht zu der Transportrichtung (A) orientiert ist.

5. Transporteur nach Anspruch 3 oder 4, **dadurch gekennzeichnet, dass** die wenigstens eine Behälteraufnahme (6) derart schwenkbar ist, dass der an der Behälteraufnahme (6) gehaltene Behälter (2) im geschwenkten Zustand mit einem der Behälteraufnahme (6) entfernt liegenden Behälterabschnitt, beispielsweise mit einem Behälterboden (2.2), dem an der Behälteraufnahme (6) gehaltenen Behälterabschnitt (2.1) in Transportrichtung (A) des Transportelementes (3) vorauseilt oder nacheilt.

6. Transporteur nach einem Ansprüche 3 - 5, **dadurch gekennzeichnet, dass** die wenigstens eine Behälteraufnahme (6) um die Schwenkachse (52) derart schwenkbar ist, dass der Behälter (2) im geschwenkten Zustand gewendet ist, d.h. mit dem an der Behälteraufnahme (6) gehaltenen Behälterabschnitt (2.1) unten liegend gehalten ist.

7. Transporteur nach einem der vorhergehenden Ansprüche, **dadurch gekennzeichnet, dass** die wenigstens eine Behälteraufnahme (6) um eine Achse, vorzugsweise um die Achse (BA) des an der Behälteraufnahme (6) gehaltenen Behälters (2) drehbar ist.

8. Transporteur nach Anspruch 7, **dadurch gekennzeichnet, dass** die wenigstens eine Behälteraufnahme (6) um die Achse (BA) drehwinkelgesteuert drehbar ist.

9. Transporteur nach Anspruch 7 oder 8, **dadurch gekennzeichnet, dass** die wenigstens eine Behälteraufnahme (6) um die Achse (BA) rotierend antreibbar ist.

10. Transporteur nach einem der vorhergehenden Ansprüche, **dadurch gekennzeichnet, dass** die wenigstens eine Behälteraufnahme (6) in der Achse (BA) des an der Behälteraufnahme (6) gehaltenen Behälters (2) relativ zum Transportelement (3) bewegbar ist.

11. Transporteur nach einem der vorhergehenden Ansprüche, **gekennzeichnet durch** Antriebs- und/oder Steuerelemente für die Bewegung der wenigstens einen Behälteraufnahme in wenigstens einer Achse und/oder um wenigstens eine Achse.

12. Transporteur nach einem der vorhergehenden Ansprüche, **dadurch gekennzeichnet, dass** die von dem Transportelement (3) gebildete Schlaufe zumindest in einem Teilabschnitt in einer horizontalen oder annähernd horizontalen Ebene liegt.

13. Transporteur nach einem der vorhergehenden Ansprüche, **dadurch gekennzeichnet, dass** die von dem Transportelement (3) gebildete Schlaufe zumindest in einem Teilabschnitt in einer gegenüber der horizontalen geneigten Ebene verläuft.

14. Transporteur nach einem der vorhergehenden Ansprüche, **gekennzeichnet durch** eine Vielzahl von in Transportrichtung (A) gegeneinander versetzten Behälteraufnahmen (6) am Transportelement (3).

15. Transporteur nach einem der vorhergehenden Ansprüche, **dadurch gekennzeichnet, dass** das Transportelement (3) von wenigstens einem Gurt und/oder einer Kette und/oder einem Band gebildet ist.

16. Transporteur nach einem der vorhergehenden Ansprüche, **dadurch gekennzeichnet, dass** die Antriebs- und/oder Steuermittel zumindest zum Teil an dem Transportelement (3) u nd/oder an der wenigstens einen Behälteraufnahme (6) vorgesehen sind.

17. Transporteur nach einem der vorhergehenden Ansprüche, **dadurch gekennzeichnet, dass** die Antriebs- und/oder Steuermittel zumindest zum Teil an der Bewegungsbahn der wenigstens einen Behälteraufnahme und mit dieser sich nicht mitbewegend z.B. an einem Maschinengestell vorgesehen sind.

## Claims

1. Conveyor for bottles or similar containers (2) having at least one transporting element (3) which forms a closed loop and can be driven in circulation, and at least one container mount (6) movably provided on the transporting element (3) for at least one container (2), **characterized in that** the at least one container mount (6) is movable relative to the transporting element (3) along at least two axes (BA, S1, S2) extending perpendicular to each other.

2. The conveyor according to claim 1, **characterized in that** the at least one container mount (6) is formed for securing at least one container (2) in a hanging state.

3. The conveyor according to claim 1 or 2, **characterized in that** at least one axis is a swivelling axis (S1, S2) and the container mount (6) is provided on the transporting element (3) so as to be swivelled, preferably swivelled in controlled action, about said axis.

4. The conveyor according to claim 3, **characterized in that** the at least one swivelling axis (S1, S2) is oriented in a transport direction (A) of the transporting element (3) or perpendicular to the transport direction (A).

5. The conveyor according to claim 3 or 4, **characterized in that** the at least one container mount (6) can be swivelled such that in a swivelled state the container (2) held on the container mount (6) leads or trails the container portion (2.1) held on the container mount (6) in the transport direction (A) together with a container portion remote from the container mount (6), for example, with a container bottom (2.2).

6. The conveyor according to any one of claims 3-5, **characterized in that** the at least one container mount (6) can be swivelled about the swivelling axis (52) such that the container (2) is inverted in the swivelled state, that is, is held with the container portion (2.1) held on the container mount (6) at the bottom.

7. The conveyor according to any one of the preceding claims, **characterized in that** the at least one container mount (6) can be rotated about an axis, preferably about the axis (BA) of the container (2) held on the container mount (6).

8. The conveyor according to claim 7, **characterized in that** the at least one container mount (6) can be rotated about the axis (BA) by angle control action.

9. The conveyor according to claim 7 or 8, **characterized in that** the at least one container mount (6) can be driven in circulation about the axis (BA).

10. The conveyor according to any one of the preceding claims, **characterized in that** the at least one container mount (6) can be moved relative to the transporting element (3) along the axis (BA) of the container (2) held on the container mount (6).

11. The conveyor according to any one of the preceding claims, **characterized by** drive and/or control elements for the movement of the at least one container mount along at least one axis and/or about at least one axis.

12. The conveyor according to any one of the preceding claims, **characterized in that** at least one portion of the loop formed by the transporting element (3) lies in a horizontal or nearly horizontal plane.

13. The conveyor according to any one of the preceding claims, **characterized in that** at least one portion of the loop formed by the transporting element (3) extends in a plane inclined relative to the horizontal.

14. The conveyor according to any one of the preceding claims, **characterized by** a plurality of container mounts (6) on the transporting element (3) offset from one another in the transport direction (A).

15. The conveyor according to any one of the preceding claims, **characterized in that** the transporting element (3) is formed by at least one belt and/or chain and/or band.

16. The conveyor according to any one of the preceding claims, **characterized in that** the drive and/or control means are provided at least in part on the transporting element (3) and/or on the at least one container mount (6).

17. The conveyor according to any one of the preceding claims, **characterized in that** the drive and/or control means are provided at least in part in the line of motion of the at least one container mount and do not move with the latter, e.g. are on a machine rack.

## Revendications

1. Transporteur pour bouteilles ou récipients similaires (2), comportant au moins un élément de transport (3) formant une boucle fermée et pouvant être entraîné de manière rotative, et comportant au moins un logement pour récipient (6) prévu de manière mobile sur l'élément de transport (3) pour au moins un récipient (6), **caractérisé en ce que** ledit au moins un logement pour récipient (6) est mobile par rapport à l'élément de transport (3) selon au moins deux axes (BA, S1, S2) qui s'étendant perpendiculairement l'un par rapport à l'autre.

2. Transporteur selon la revendication 1, **caractérisé en ce que** ledit au moins une logement pour récipient (6) est formé pour fixer de manière suspendue au moins un récipient (2).

3. Transporteur selon la revendication 1 ou 2, **caractérisé en ce qu'**au moins un axe est un axe de pivotement (S1, S2) autour duquel le logement pour récipient (6) peut être pivoté ou est prévu de préférence de manière à pouvoir pivoter de manière commandée sur l'élément de transport (3).

4. Transporteur selon la revendication 3, **caractérisé en ce que** l'axe de pivotement (S1, S2) au moins au nombre de un est orienté dans une direction de transport (A) de l'élément de transport (3) ou est orienté de manière perpendiculaire par rapport à la direction de transport (A).

5. Transporteur selon la revendication 3 ou 4, **caractérisé en ce que** ledit au moins un logement pour récipient (6) peut être pivoté de telle manière que le récipient (2) maintenu sur le logement pour récipient (6), à l'état pivoté, peut être en avance de phase ou en retard de phase dans la direction de transport (A) de l'élément de transport (3) par rapport à une section de récipient se trouvant à distance du logement pour récipient (6), par exemple avec un fond de récipient (2.2), avec la section de récipient (2.1) maintenue sur le logement pour récipient (6).

6. Transporteur selon l'une quelconque des revendications 3 à 5, **caractérisé en ce que** ledit au moins un logement pour récipient (6) peut être pivoté autour de l'axe de pivotement (S2) de telle sorte que le récipient (2) est renversé dans un état pivoté, c'est-à-dire qu'il est maintenu en bas avec la section de récipient (2.1) maintenue sur le logement pour récipient (6).

7. Transporteur selon l'une quelconque des revendications précédentes, **caractérisé en ce que** ledit au moins un logement pour récipient (6) peut être tourné autour d'un axe, de préférence autour de l'axe (BA) du récipient (2) maintenu sur le logement pour récipient (6).

8. Transporteur selon la revendication 7, **caractérisé en ce que** ledit au moins un logement pour récipient (6) peut être tourné autour de l'axe (BA) de manière commandée selon un angle de rotation.

9. Transporteur selon la revendication 7 ou 8, **caractérisé en ce que** ledit au moins un logement pour récipient (6) peut être entraîné en rotation autour de l'axe (BA).

10. Transporteur selon l'une quelconque des revendications précédentes, **caractérisé en ce que** ledit au moins un logement pour récipient (6) peut être déplacé selon l'axe (BA) du récipient (2) maintenu sur le logement pour récipient (6) par rapport à l'élément de transport (3).

11. Transporteur selon l'une quelconque des revendications, **caractérisé par** des éléments d'entraînement et/ou de commande pour le déplacement dudit au moins un logement pour récipient (6) selon au moins un axe et/ou autour d'au moins un axe.

12. Transporteur selon l'une quelconque des revendications précédentes, **caractérisé en ce que** la boucle fermée formée par l'élément de transport (3) se trouve au moins dans une section partielle dans un plan horizontal ou approximativement horizontal.

13. Transporteur selon l'une quelconque des revendications précédentes, **caractérisé en ce que** la boucle fermée formée par l'élément de transport (3) s'étend au moins dans une section partielle dans un plan incliné par rapport au plan horizontal.

14. Transporteur selon l'une quelconque des revendications précédentes, **caractérisé par** une pluralité de logements pour récipient (6) décalés les uns par rapport aux autres dans la direction de transport (A) sur l'élément de transport (3).

15. Transport selon l'une quelconque des revendications précédentes, **caractérisé en ce que** l'élément de transport (3) est formé par au moins une sangle et/ou une chaîne et/ou une bande.

16. Transporteur selon l'une quelconque des revendications précédentes, **caractérisé en ce que** les moyens d'entraînement et/ou de commande sont prévus au moins en partie sur l'élément de transport (3) et/ou sur ledit au moins un logement pour récipient (6).

17. Transporteur selon l'une quelconque des revendications précédentes, **caractérisé en ce que** les moyens d'entraînement et/ou de commande sont prévus au moins en partie sur la bande de déplacement dudit au moins un logement pour récipient et sont prévus par exemple sur le bâti de machine de manière à ne pas se déplacer avec la bande de déplacement.
